# EUROPÄISCHE PATENTSCHRIFT

(11) **EP 0 895 906 B1**
(45) Veröffentlichungstag und Bekanntmachung des Hinweises auf die Patenterteilung: **01.10.2003**
(21) Anmeldenummer: 98113749.0
(22) Anmeldetag: 23.07.1998
(51) Int. Cl.: B60R 22/44, B60R 22/34

(54) **Gurtroller für ein Sicherheitsgurtsystem eines Personensitzes**
Retractor for a safety belt system of a passenger seat
Enrouleur pour une ceinture de sécurité d'un siège de passager

(30) Priorität: 05.08.1997 DE 19733787
(43) Veröffentlichungstag der Anmeldung: 10.02.1999
(73) Patentinhaber: DaimlerChrysler AG, 70567 Stuttgart (DE)
(72) Erfinder: Brambilla, Luigi, Dr., 71032 Böblingen (DE); Jahn, Walter, 71139 Ehningen (DE)

(56) Entgegenhaltungen:
- DE-A- 19 653 510

## Beschreibung

Die Erfindung betrifft einen Gurtroller für ein Sicherheitsgurtsystem eines Personensitzes, insbesondere in einem Kraftfahrzeug, mit einer zum Aufwickeln eines Gurtbandes dienenden, drehbar gelagerten Hohlwelle, sowie mit einer koaxial innerhalb der Hohlwelle angeordneten und drehschlüssig mit dieser verbundenen Torsionsstabanordnung, der Mittel zum Verändern ihres Energieabsorptionsvermögens abhängig von dem Gewicht einer auf dem Personensitz befindlichen Person zugeordnet sind, und mit einer Sperreinrichtung, die zur Arretierung der Hohlwelle bei einem definierten, ruckartigen Auszug des Gurtbandes mit der Torsionsstabanordnung in Wirkverbindung bringbar ist, wobei die Torsionsstabanordnung einen Torsionsstab sowie wenigstens eine diesen koaxial umgebende Torsionshülse aufweist, und wobei die Sperreinrichtung mit wenigstens zwei axial versetzten Sperrgliedabschnitten versehen ist, die mittels einer Steuerungseinheit abhängig von dem aufzubringenden Energieabsorptionsvermögen dem Torsionsstab und der wenigstens einen Torsionshülse einzeln oder gemeinsam zustellbar sind.

Ein Gurtroller ist aus der DE 27 27 470 A1 bekannt. Der Gurtroller weist eine Hohlwelle auf, auf der das auszuziehende Gurtband aufgewickelt ist. Die Hohlwelle ist koaxial von einer Torsionsstabanordnung in Form eines einzelnen Torsionsstabes durchsetzt, dessen Einspannlänge über eine Schiebehülse veränderbar ist. Die Verstellung der Schiebehülse und damit auch die Änderung des Energieabsorptionsvermögens des Torsionsstabes erfolgt durch eine Seilzuganordnung, die direkt mit einer Sitzfläche des Personensitzes in Verbindung steht. Je nachdem, wie tief die Sitzfläche durch das Gewicht der auf dieser befindlichen Person eingesessen ist, wird zwangsläufig eine geeignete Verschiebung der Schiebehülse und damit die jeweils gewünschte Gurtkraftbegrenzung erzielt. Der Torsionsstab ist an einer Seite drehschlüssig mit der Hohlwelle verbunden und an der gegenüberliegenden Seite durch eine Sperreinrichtung beaufschlagbar, die in an sich bekannter Weise ab einem in seiner Beschleunigung vorgegebenen Ruck des Gurtbandes des Sicherheitsgurtes betätigt wird.

Aus der DE 43 44 656 C1 ist ein Gurtroller bekannt, dessen Gurtkraftbegrenzung abhängig vom Gewicht einer auf dem Personensitz befindlichen Person veränderbar ist. Dazu ist ein konisch gestalteter Torsionsstab vorgesehen, der ebenfalls durch eine entsprechende Betätigungseinrichtung axial verschiebbar ist, wodurch die entsprechende Änderung des Energieabsorptionsvermögens des Torsionsstabes geschaffen wird.

Ein weiterer Gurtroller ist aus der DE 196 53 510 A1 bekannt. Der bekannte Gurtroller entspricht dem Oberbegriff des Anspruchs 1 und weist eine mehrstufig wirkende Torsionsstabanordnung auf, die durch einen Torsionsstab einerseits und eine diesen koaxial umgebende Torsionshülse gebildet ist. Dem Torsionsstab und der Torsionshülse ist jeweils eine eigene Sperrgliedanordnung zustellbar, die jeweils für sich oder gemeinsam betätigbar sind.

Aufgabe der Erfindung ist es, einen Gurtroller der eingangs genannten Art zu schaffen, der mit einfachen Mitteln eine Anpassung der Gurtkraftbegrenzung an verschiedene Personen mit unterschiedlichem Gewicht auf den Personensitz ermöglicht.

Diese Aufgabe wird bei dem gattungsgemäβen Gurtroller darduch gelöst, dass die Sperrgliedabschnitte gemeinsam an einem Sperrglied angeordnet sind, wobei die Sperrgliedabschnitte in Zustellrichtung des Sperrgliedes derart versetzt angeordnet sind, dass zunächst der den Torsionsstab beaufschlagende Sperrgliedabschnitt mit dem Torsionsstab in Wirk-Verbindung gelangt. Durch das Vorsehen des Torsionsstabes sowie der wenigstens einen diesen koaxial umgebenden Torsionshülse ist eine stufenweise Veränderung des Energieabsorptionsvermögens erzielbar, wobei je nach der Anzahl der den Torsionsstab jeweils nach außen koaxial umschließenden Torsionshülsen auch die Anzahl der Stufen zur Einstellung des Energieabsorptionsvermögens definiert ist. Die Mittel zum Verändern des Energieabsorptionsvermögens der Torsionsstabanordnung sind direkt im Bereich der Sperreinrichtung und nicht auf einer gegenüberliegenden Seite des Gurtrollers vorgesehen. Dies ergibt eine Einsparung von Bauteilen und eine platzsparende Anordnung. Die axiale Versetzung der Sperrgliedabschnitte ermöglicht den gleichzeitigen Eingriff aller Sperrgliedabschnitte, so dass die Torsionsstabanordnung entweder lediglich teilweise oder aber insgesamt durch die Sperreinrichtung blockierbar ist. Die Anordnung der Sperrgliedabschnitte an einem gemeinsamen Sperrglied gewährleistet einen besonders einfachen Aufbau. Die in Zustellrichtung versetzte Anordnung der Sperrgliedabschnitte an dem gemeinsamen Sperrglied bewirkt, dass in der ersten Stufe der Gurtkraftbegrenzung der Torsionsstab selbst beaufschlagt wird. In einer zweiten Stufe erfolgt eine gemeinsame Beaufschlagung des Torsionsstabes sowie der ersten Torsionshülse, gegebenenfalls in einer dritten Stufe dann die ergänzende Beaufschlagung der zweiten Torsionshülse und so weiter.

In weiterer Ausgestaltung der Erfindung sind die Sperrgliedabschnitte als der Torsionsstabanordnung radial zustellbare Rastzahnelemente gestaltet, und sowohl am Torsionsstab als auch an der wenigstens einen Torsionshülse sind korrespondierende Ringverzahnungen vorgesehen. Durch die radiale Zustellbarkeit der Rastzahnelemente wird in axialer Richtung kein zusätzlicher Bauraum für den Gurtroller benötigt. Vorzugsweise sind die Ringverzahnungen als auf die benachbarten Stirnseiten des Torsionsstabes sowie der wenigstens einen Torsionshülse aufgesetzte Zahnräder gestaltet. Die Rastzahnelemente sind klinkenartig ausgeführt.

In weiterer Ausgestaltung der Erfindung ist dem Sperrglied wenigstens ein durch die Steuerungseinheit zustellbarer Anschlag zugeordnet, der das Sperrglied für eine stufenweise Wirkverbindung mit der Torsionsstabanordnung in seinem Zustellweg begrenzt. Der Anschlag ist vorzugsweise elektromagnetisch zwischen seiner Ruheposition und seiner das Sperrglied entsprechend blockierenden Funktionsposition beweglich, wobei die Verstellung des Anschlages durch die Steuerungseinheit abhängig von einer elektronischen Gewichtserkennung im Bereich der Sitzfläche des Personensitzes erfolgt.

In weiterer Ausgestaltung der Erfindung ist eine Verzahnungstiefe der Ringverzahnung des Torsionsstabes derart ausgelegt, daß ein Eingriff des zugeordneten Rastzahnelementes sowohl in der ersten als auch in der letzten Stufe der Wirkverbindung mit der Torsionsstabanordnung erfolgt. Dadurch wird mit besonders einfachen Mitteln gewährleistet, daß der Torsionsstab in allen Stufen der Gurtkraftbegrenzung wirksam ist.

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnungen dargestellt ist.
- Fig. 1: zeigt schematisch einen Längsschnitt durch eine Ausführungsform eines erfindungsgemäßen Gurtrollers, der mit einer zweistufigen Gurtkraftbegrenzung versehen ist,
- Fig. 2: einen Ausschnitt des Gurtrollers nach Fig. 1 in einer ersten Stufe der Gurtkraftbegrenzung, und
- Fig. 3: den Ausschnitt nach Fig. 2 in einer zweiten Stufe der Gurtkraftbegrenzung.

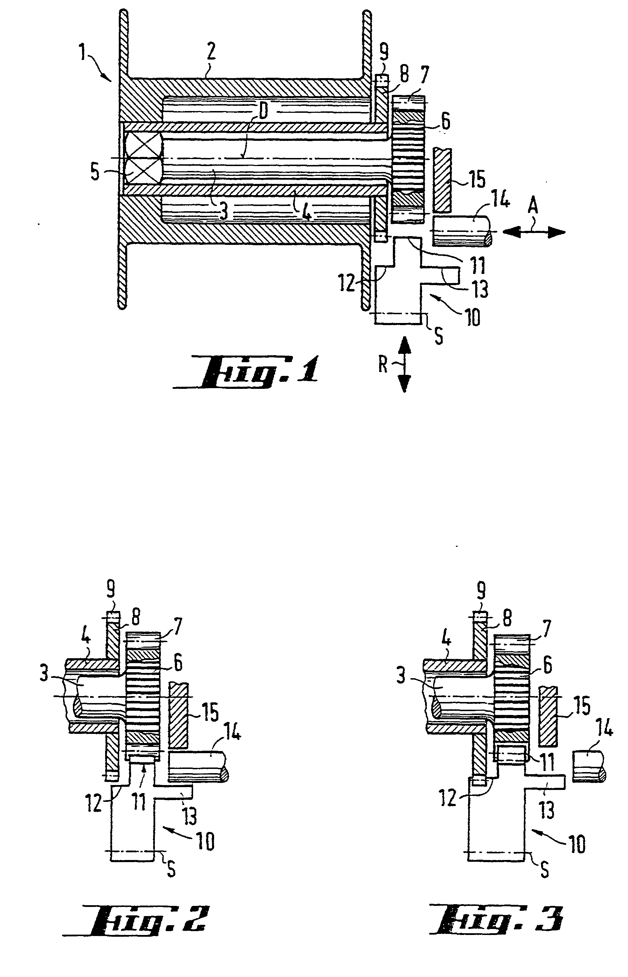

Ein Gurtroller gemäß den Fig. 1 bis 3 ist Teil eines Sicherheitsgurtsystems für einen Fahrzeugsitz eines Personenkraftwagens. Der Gurtroller weist eine Hohlwelle 1 auf, die auf ihrem Außenumfang mit einem Aufwickelbereich 2 zum Aufwickeln eines Gurtbandes des Sicherheitsgurtes versehen ist. Die Hohlwelle 1, 2 ist um eine Drehachse D in an sich bekannter Weise drehbar gelagert. Außerdem ist der Hohlwelle 1, 2 eine nicht dargestellte Rückzugvorrichtung zugeordnet, die in an sich bekannter Weise ein automatisches Aufwickeln des Gurtbandes bewirkt.

Ab einer definierten Beschleunigung des Gurtbandauszuges wird eine weitere Drehung der Hohlwelle 1, 2 gesperrt, so daß der Sicherheitsgurt in seiner angelegten Position blockiert wird. Dies erfolgt in an sich bekannter Weise bei einer plötzlichen Fahrzeugverzögerung und einem daraus resultierenden Nachvornefallen einer auf dem Fahrzeugsitz befindlichen Person. Durch das Blockieren des Sicherheitsgurtes wird die eigentliche Rückhaltefunktion des Sicherheitsgurtes bei dieser Fahrzeugverzögerung ausgeübt. Um die Arretierung der Hohlwelle 1, 2 zu erreichen, ist dieser eine insgesamt nicht näher dargestellte Sperrvorrichtung zugeordnet, die in an sich bekannter Weise durch entsprechende Fliehkraftelemente bei einem ruckartigen Auszug des Gurtbandes ein Einfallen einer Rastklinke 10 bewirkt, die ein Sperrglied der Sperrvorrichtung darstellt. Die Rastklinke 10 ist um eine zu der Drehachse D parallele Schwenkachse S schwenkbeweglich gelagert. Die Rastklinke 10 wirkt auf eine korrespondierende, als Ringverzahnung gestaltete Außenverzahnung 7 eines Zahnrades 6, das an einem über die Hohlwelle 1, 2 axial nach außen ragenden Stirnende eines Torsionsstabes 3 drehfest angeordnet ist. Der Torsionsstab 3 ist Teil einer Torsionsstabanordnung, die zur Begrenzung der Gurtkraft - wie nachfolgend näher beschrieben - dient. Der Torsionsstab 3 ist koaxial zur Drehachse D innerhalb der Hohlwelle 1, 2 angeordnet und an seinem gegenüberliegenden Stirnende drehfest mit der Hohlwelle 1, 2 verbunden. Dazu ist dieses Stirnende des Torsionsstabes 3 mittels einer Fixiervorrichtung 5 formschlüssig an einem entsprechenden Innenflansch der Hohlwelle 1, 2 festgelegt.

Ebenfalls Teil der Torsionsstabanordnung ist eine Torsionshülse 4, die den Torsionsstab 3 in geringem Abstand außen koaxial übergreift und mit ihrem in den Fig. 1 bis 3 rechten Stirnende ebenfalls über die zugehörige Stirnseite der Hohlwelle 1, 2 hinausragt. Die Torsionshülse 4 ist ebenfalls unter Energieabsorption bei einer Verdrehung deformierbar. Dabei ist die Torsionshülse 4 wie auch der Torsionsstab 3 in gleicher Weise im Bereich seines gegenüberliegenden Stirnendes derart formschlüssig eingespannt, daß eine drehschlüssige Verbindung mit der Hohlwelle 1, 2 erzielt wird. Auch auf die Torsionshülse 4 ist an ihrem aus der Hohlwelle 1, 2 herausragenden Stirnende ein mit einer als Ringverzahnung gestalteten Außenverzahnung 9 versehenes Zahnrad 8 drehschlüssig aufgesetzt, wobei vorzugsweise sowohl das Zahnrad 8 als auch das Zahnrad 6 auf die Torsionshülse 4 bzw. auf den Torsionsstab 3 aufgeschweißt sind. Das Zahnrad 8 ist axial versetzt in einer parallelen Radialebene zum Zahnrad 6 ausgerichtet und weist eine geringere Dicke auf als das Zahnrad 6. Der Durchmesser des Zahnrades 8 ist größer als der Durchmesser des Zahnrades 6.

Durch ein Einfallen der Rastklinke 10 in die Außenverzahnung 7 des Zahnrades 6 wird eine weitere Drehung der Hohlwelle 1, 2 verhindert, wobei eine Torsion des Torsionsstabes 3 noch ein gewisses Nachgeben des Gurtbandes und damit die gewünschte Gurtkraftbegrenzung bewirkt. Die Rastklinke 10 weist zwei als Sperrgliedabschnitte in Form von Rastzahnelementen dienende Rastabschnitte 11, 12 auf, wobei ein Rastabschnitt 11 der Außenverzahnung 7 des Zahnrades 6 und der zweite Rastabschnitt 12 der Außenverzahnung 9 des Zahnrades 4 zugeordnet ist. Die Rastklinke 10 fällt radial in die beiden Zahnräder 6, 8 ein, wobei die Rastabschnitte 11, 12 derart in Zustellrichtung R versetzt zueinander angeordnet sind, daß zunächst der Rastabschnitt 11 in die Außenverzahnung 7 des Zahnrades 6 einfällt, ohne daß auch der Rastabschnitt 12 mit der Außenverzahnung 9 des Zahnrades 8 in Eingriff gerät (Fig. 2). Falls die Rastklinke 10 in Zustellrichtung R noch weiter radial nach innen verschwenkt wird (Fig. 3), so greift auch der Rastabschnitt 12 ergänzend in die Außenverzahnung 9 des Zahnrades 8 ein. Die Rastklinke 10 beaufschlagt in dieser Position somit beide Zahnräder 6, 8 und damit auch die gesamte Torsionsstabanordnung, d.h. sowohl den Torsionsstab 3 als auch die Torsionshülse 4. Die Tiefe der Außenverzahnung 7 ist derart bemessen, daß bereits in der ersten Position des Rastabschnittes 11 gemäß Fig. 2 eine ausreichende Blockierung des Zahnrades 6 erzielt wird, daß zusätzlich jedoch auch ein weiteres, radiales Nachinnenbewegen der Rastklinke 10 aufgrund der entsprechenden Tiefe der Außenverzahnung 7 noch ermöglicht wird, um auch das Einfallen des zweiten Rastabschnittes 12 in die axial versetzte Außenverzahnung 9 des Zahnrades 8 zu gewährleisten.

Sobald beide Rastabschnitte 11, 12 in die zugehörigen Außenverzahnungen 7, 9 eingefallen sind, sind sowohl der Torsionsstab 3 als auch die Torsionshülse 4 gemeinsam tordierbar, wodurch sich eine Gurtkraftbegrenzung auf einem höheren Niveau ergibt. Der Gurtroller gemäß den Fig. 1 bis 3 ermöglicht somit eine zweistufige Gurtkraftbegrenzung.

Um die Zweistufigkeit der Gurtkraftbegrenzung zuverlässig steuern zu können, ist an der Rastklinke 10 ein einstückig angeordneter, axial nach außen ragender Fortsatz 13 vorgesehen, der an einem Anschlagstößel 14 anschlagen kann. Dieser Anschlagstößel 14 ist zwischen einer Ruheposition (Fig. 3) und einer Funktionsposition (Fig. 1 und 2) axial in Pfeilrichtung A linearbeweglich gelagert. Der Anschlagstößel 14 wird durch eine Steuereinheit betätigt, die abhängig vom Gewicht einer auf dem Fahrzeugsitz befindlichen Person eine Verschiebung des Anschlagstößels 14 in seine Funktionsposition oder seine Ruheposition bewirkt. Der Anschlagstößel 14 stützt sich an einem Gehäuseteil 15 eines nicht näher dargestellten, da bekannten Gurtrollergehäuses ab, so daß er durch die Einfallkraft der Rastklinke 10 nicht weggedrückt werden kann. Sobald der Anschlagstößel 14 sich in seiner Funktionsposition befindet, kommt der Fortsatz 13 beim Einfallen der Rastklinke 10 in Pfeilrichtung R an dem Anschlagstößel 14 zur Anlage, wodurch eine weitere Bewegung der Rastklinke 10 blockiert ist. In dieser Funktionsposition des Anschlagstößels 14 greift lediglich der Rastabschnitt 11 in die Außenverzahnung 7 des Zahnrades 6 ein, so daß die Sperreinrichtung lediglich über den Torsionsstab 3 mit der Hohlwelle 1, 2 in Wirkverbindung steht. Diese erste Stufe ist für Personen mit geringerem Gewicht geeignet. Falls die Steuereinheit - wie nachfolgend kurz beschrieben werden wird - erkannt hat, daß auf dem Fahrzeugsitz eine Person mit größerem Gewicht befindlich ist, so wird der Anschlagstößel 14 in seine Ruheposition zurückgezogen, wodurch die Sperreinrichtung mit der gesamten Torsionsstabanordnung, d.h. sowohl mit dem Torsionsstab 3 als auch mit der Torsionshülse 4, in Wirkverbindung gelangt. Die Gurtkraftbegrenzung ist somit entsprechend erhöht.

Der Anschlagstößel 14 wird vorzugsweise durch einen Elektromagneten beaufschlagt, der durch die Steuereinheit angesteuert ist. Im Bereich einer Sitzfläche des Fahrzeugsitzes ist eine elektronische Gewichtserkennung vorgesehen, die über entsprechende Signalleitungen mit der Steuereinheit in Verbindung steht. Die Steuereinheit wertet die entsprechenden Gewichtserkennungssignale aus und gibt entsprechende Steuerbefehle zur Aktivierung oder Deaktivierung des Elektromagneten aus, wodurch die entsprechende Linearverschiebung des Anschlagstößels 14 erzielt wird. Vorzugsweise wird der Anschlagstößel 14 in einer Richtung durch Federkraft beaufschlagt, so daß die Funktion des Elektromagneten lediglich für die jeweils andere Richtungsverschiebung erforderlich ist.

In gleicher Weise ist die Verschiebung des Anschlagstößels 14 auch mittels eines Seilzuges gemäß der Ausgestaltungen des in der Beschreibungseinleitung gewürdigten Standes der Technik ausführbar.

## Patentansprüche

1. Gurtroller für ein Sicherheitsgurtsystem eines Personensitzes, insbesondere in einem Kraftfahrzeug, mit einer zum Aufwickeln eines Gurtbandes dienenden, drehbar gelagerten Hohlwelle, sowie mit einer koaxial innerhalb der Hohlwelle angeordneten und drehschlüssig mit dieser verbundenen Torsionsstabanordnung, der Mittel zum Verändern ihres Energieabsorptionsvermögens abhängig von dem Gewicht einer auf dem Personensitz befindlichen Person zugeordnet sind, und mit einer Sperreinrichtung, die zur Arretierung der Hohlwelle bei einem definierten, ruckartigen Auszug des Gurtbandes mit der Torsionsstabanordnung in Wirkverbindung bringbar ist, wobei die Torsionsstabanordnung einen Torsionsstab sowie wenigstens eine diesen koaxial umgebende Torsionshülse aufweist, und wobei die Sperreinrichtung mit wenigstens zwei axial versetzten Sperrgliedabschnitten versehen ist, die mittels einer Steuerungseinheit abhängig von dem aufzubringenden E-nergieabsorptionsvermögen dem Torsionsstab und der wenigstens einen Torsionshülse einzeln oder gemeinsam zustellbar sind,
**dadurch gekennzeichnet,**
**dass** die Sperrgliedabschnitte (11, 12) gemeinsam an einem Sperrglied (10) angeordnet sind, wobei die Sperrgliedabschnitte (11, 12) in Zustellrichtung (R) des Sperrglieds (10) derart versetzt angeordnet sind, dass zunächst der den Torsionsstab (3) beaufschlagende Sperrgliedabschnitt (11) mit dem Torsionsstab in Wirkverbindung gelangt.

2. Gurtroller nach Anspruch 1,
**dadurch gekennzeichnet,**
**dass** die Sperrgliedabschnitte (11, 12) als der Torsionsstabanordnung (3, 4) radial zustellbare Rastzahnelemente gestaltet sind, und dass sowohl am Torsionsstab (3) als auch an der wenigstens einen Torsionshülse (4) korrespondierende Ringverzahnung (7, 9) vorgesehen sind.

3. Gurtroller nach Anspruch 1,
**dadurch gekennzeichnet,**
**dass** dem Sperrglied (10) wenigstens ein durch die Steuerungseinheit zustellbarer Anschlag (14) zugeordnet ist, des das Sperrglied (10) für eine stufenweise Wirkverbindung mit der Torsionsstabanordnung (3, 4) in seinem Zustellweg begrenzt.

4. Gurtroller nach einem der vorhergegangenen Ansprüche,
**dadurch gekennzeichnet,**
**dass** eine Verzahnungstiefe der Ringverzahnung (7) des Torsionsstabes (3) derart ausgelegt ist, dass ein Eingriff des zugeordneten Rastzahnelements (11) sowohl in der ersten als auch in der letzten Stufe der Wirkverbindung mit der Torsionsstabanordnung (3, 4) erfolgt.

## Claims

1. A belt roller of a safety belt system for a seat, particularly in a motor vehicle, having a hollow shaft mounted such that it is able to rotate which serves to wind in the belt webbing and having a torsion bar arrangement positioned coaxially inside the hollow shaft and connected to it in such a manner that it is unable to rotate with which are associated means of adjusting its energy absorption capacity dependent on the weight of a person sitting on the seat, and having a blocking device which can be actively connected to the torsion bar arrangement in order to stop the hollow shaft in the event of a defined, jerky extraction of the belt webbing, the torsion bar arrangement having a torsion bar and at least one torsion sleeve coaxially encompassing it and the blocking device being provided with at least two axially offset blocking element sections which can be advanced towards the torsion bar and the at least one torsion sleeve by means of a control unit dependent on the energy absorption capacity to be applied,
**characterised in that**
the blocking element sections (11, 12) are positioned together on one blocking element (10), said blocking element sections (11, 12) being offset in relation to one another in the direction of travel (R) of the blocking element (10) in such a manner that the blocking element section (11) which strikes the torsion bar (3) is in active connection with the torsion bar.

2. A belt roller in accordance with claim 1,
**characterised in that**
the blocking element sections (11, 12) are designed as locking tooth elements which can be advanced radially towards the torsion bar arrangement (3, 4) and corresponding ring toothing is provided on both the torsion bar (3) and the at least one torsion sleeve (4).

3. A belt roller in accordance with claim 1,
**characterised in that**
associated with the locking element (10) is at least one stop (14) which can be advanced by the control unit and which limits the advance travel of the blocking element (10) in order to achieve a stage-by-stage active connection with the torsion bar arrangement (3, 4).

4. A belt roller in accordance with one of the preceding claims,
**characterised in that**
the depth of the ring toothing (7) on the torsion bar (3) is designed such that the associated locking tooth element (11) engages with the torsion bar arrangement (3, 4) in both the first and the last stage of the active connection.

## Revendications

1. Enrouleur de ceinture, pour un système de ceinture de sécurité d'un siège de passager, en particulier dans un véhicule automobile, avec un arbre creux monté à rotation, servant à enrouler une ceinture, ainsi qu'avec un agencement à barre de torsion, disposé coaxialement à l'intérieur de l'arbre creux et relié à celui-ci en étant assujetti en rotation, agencement auquel sont associés des moyens pour modifier son pouvoir d'absorption d'énergie en fonction du poids d'une personne se trouvant sur le siège de passager, et avec un dispositif de blocage pouvant être placé en liaison fonctionnelle avec l'agencement à barre de torsion pour bloquer l'arbre creux lors d'une extraction vers l'arrière, définie, de la ceinture, l'agencement à barre de torsion présentant une barre de torsion ainsi qu'au moins une douille de torsion, entourant celle-ci coaxialement, et le dispositif de blocage étant muni d'au moins deux tronçons d'organe de blocage décalés axialement, qui peuvent être plaqués individuellement ou conjointement à l'aide d'une unité de commande en fonction du pouvoir d'absorption d'énergie à appliquer sur la barre de torsion et sur la au moins une douille, **caractérisé en ce que** les tronçons d'organe de blocage (11, 12) sont disposés conjointement sur un organe de blocage (10), les tronçons d'organe de blocage (11, 12) étant décalés dans la direction du blocage (R) de l'organe de blocage (10), de manière que, d'abord, ce soit le tronçon d'organe de blocage (11) sollicitant la barre de torsion (3) qui passe en liaison fonctionnelle avec la barre de torsion.

2. Enrouleur de ceinture selon la revendication 1, **caractérisé en ce que** les tronçons d'organe de blocage (11, 12) sont réalisés sous forme d'éléments à denture d'encliquetage, pouvant être plaqués radialement sur l'agencement à barre de torsion (3, 4), et qu'une denture annulaire (7, 9) correspondante est respectivement prévue, tant sur la barre de torsion (3) qu'également sur la au moins une douille de torsion (4).

3. Enrouleur de ceinture selon la revendication 1, **caractérisé en ce qu'**à l'organe de blocage (10) est associé au moins une butée (14), pouvant être calée au moyen de l'unité de commande, butée limitant la course de fermeture de l'organe de blocage (10) pour obtenir une liaison fonctionnelle avec l'agencement à barre de torsion (3, 4), évoluant par degrés lors de sa course de fermeture.

4. Enrouleur de ceinture selon l'une des revendications précédentes, **caractérisé en ce qu'**une profondeur de dentures annulaires (7) de la barre de torsion (3) est telle qu'une emprise de l'élément à dent d'encliquetage (11) associé se fait, tant dans la première étape, qu'également dans la deuxième étape de la liaison fonctionnelle à l'agencement à barre de torsion (3, 4) .
